# EUROPÄISCHE PATENTANMELDUNG

(11) **EP 0 658 654 A1**
(43) Veröffentlichungstag der Anmeldung: **21.06.1995**
(21) Anmeldenummer: 94118339.4
(22) Anmeldetag: 22.11.1994
(51) Int. Cl.: E01F 1/00, B65G 69/28, E01F 9/03, G09F 19/22

(54) **Warnstreifen zur Anbringung an Verladerampen und zugehörige Verladeeinrichtungen**

(30) Priorität: 15.12.1993 DE 4342711
(71) Anmelder: Alten, Kurt, D-30974 Wennigsen (DE)
(72) Erfinder: Alten, Kurt, D-30974 Wennigsen (DE)
(74) Vertreter: Depmeyer, Lothar

(57) **Zusammenfassung**

Die Erfindung betrifft Warnstreifen (7) der obigen Art, die auch bei unvorbehandeltem Untergrund sicher angebracht werden können und zudem abriebfest sind. Erfindungsgemäss weist der aus einem elastisch verbiegbaren Werkstoff bestehende Streifen (7) im noch nicht montierten Zustand auf der Rückseite vorspringende Randbereiche (7') auf und zudem erfolgt die Befestigung der Streifen durch sie durchsetzende,nietartige Befestigungselemente (13) in der Weise, dass die Streifen in Richtung auf ihre Anlagefläche durch Verbiegen verformbar sind.

## Beschreibung

Die Erfindung betrifft einen Warnstreifen zur Anbringung an Verladerampen und zugehörige Verladeeinrichtungen, vorzugsweise an gefährlichen Rändern von Überladebrücken und Rampenausnehmungen.

Abgesehen von durch Farbauftrag aufgebrachten Warnstreifen ist es bekannt, folienartige Kunststoffstreifen zu benutzen, die aussen gestreift eingefärbt sind. Diese Streifen werden in einfacher Weise aufgeklebt, jedoch haben sie den Nachteil, dass eine dauerhafte Bindung der Streifen nur dann zustandekommt, wenn der Untergrund entsprechend beschaffen bzw. vorbereitet ist. Es besteht auch die Gefahr des Abtragens, wenn Reibkräfte auf die Streifen einwirken.

Demgegenüber sollen aufgrund der Erfindung Warnstreifen für die obige Anwendung vorgeschlagen werden, die auch bei unvorbehandeltem Untergrund montiert werden können und zudem auch bei mechanischer Beanspruchung dauerhaft sind.

Zur Lösung dieser Aufgabe weist erfindungsgemäss der aus einem elastisch verbiegbaren Werkstoff bestehende Streifen im noch nicht montierten Zustand auf der Rückseite vorspringende Randbereiche auf und zudem erfolgt die Befestigung der Streifen durch sie durchsetzende, in die Rampe bzw. die Einrichtungen eingetriebene Befestigungselemente in der Weise, dass die Streifen in Richtung auf ihre Anlagefläche durch Verbiegen verformbar sind. Zweckmässigerweise werden diese Streifen aus Aluminium oder einem Kunststoff mit entsprechendem Biegeverhalten gefertigt. Zudem erhalten die Streifen vorzugsweise eine bogenförmige Querschnittsform, jedoch ist es aber auch möglich, im wesentlichen ebene Streifenkörper zu verwenden ( im Querschnitt gesehen ), deren Ränder abgebogen oder abgewinkelt sind, um so die gewünschten vorspringenden Randbereiche zu erzeugen.

Für den Fall, dass die Streifen einen symmetrischen Querschnitt aufweisen, ist es ausreichend, wenn über die Breite des Streifens verteilt lediglich ein mittiges Befestigungselement benutzt wird. Wird dieses Element eingetrieben, so findet die gewünschte Verformung des Streifens statt; das Element wird dabei so weit eingetrieben, dass die Streifen im Lochbereich den Untergrund berühren, was jedoch kein unbedingtes Erfordernis ist. Es versteht sich, dass unter diesen Voraussetzungen die Streifenränder vorteilhafterweise eine gesteigerte Anpressung erfahren. Im übrigen bleibt in den Längenbereichen, die nicht unmittelbar von den Elementen erfasst sind, die Ursprungsgestalt des Streifenkörpers im wesentlichen erhalten; sie trägt dazu bei, die Stabilität des Streifens zu erhöhen. So kann ein Streifen mit einer Breite von etwa 1oo mm mit mittigen Befestigungselementen versehen werden, die einen gegenseitigen Abstand von etwa 25 - 40 cm haben.

Zur Befestigung der Streifen dienen vorzugsweise nietförmige Elemente, die in Löcher des Untergrundes für die Streifen eingetrieben werden müssen. Es können Blindniete benutzt werden oder aber auch nietförmige Elemente, deren Schaft mit einem sägezahnähnlichen Profil oder mit einem sog. Sperrklinkenverschluss versehen sind, wobei man vorzusweise Elemente verwendet, die aus einem zähharten Kunststoff bestehen.

Weitere Einzelheiten der Erfindung werden anhand der Zeichnung erläutert, in der ein Ausführungsbeispiel der Erfindung dargestellt ist. Es zeigen :

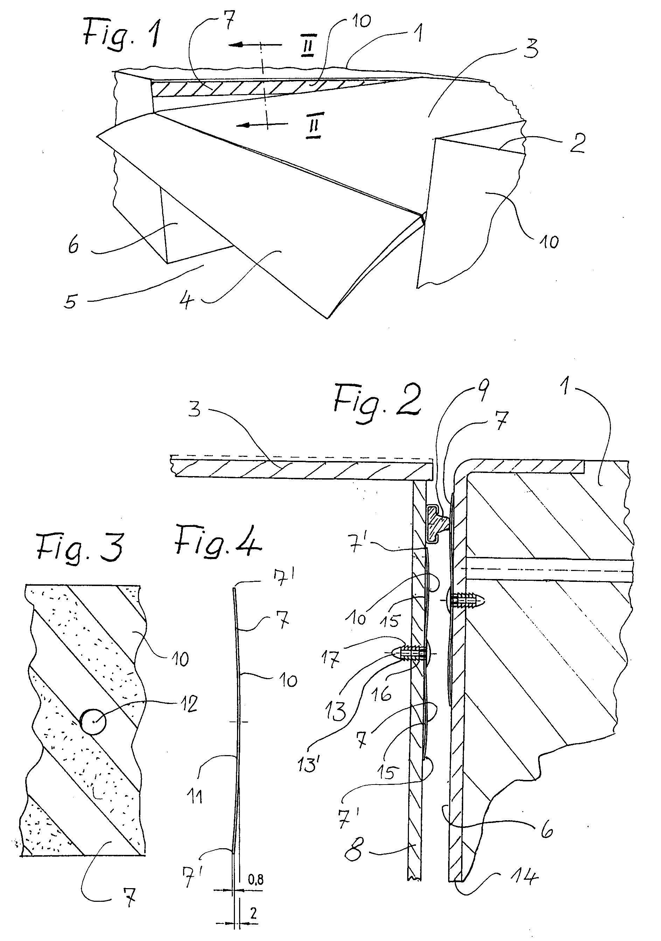

Fig. 1 eine Rampe mit einer daran gelagerten Überladebrücke in schaubildlicher Teildarstellung,
Fig. 2 einen Schnitt nach der Linie II - II von Fig. 1
Fig. 3 eine Teildrauficht auf die Aussenfläche eines Warnstreifens und
Fig. 4 den Streifen gemäss Fig. 3 in der Seitenansicht.

An der Rampe 1 mit vorderer Kante 2 ist eine Brückenplatte 3 einer Überladebrücke am hinteren Ende um eine waagerechte Achse schwenkbar gelagert. Diese Platte hat vorne eine ein- und ausklappbare Verlängerung 4 zur Auflage auf der zu be- bzw. entladenden Plattform z.B. eines Fahrzeuges. Gemäss Zeichnung ist die Brückenplatte 2 um ein geringes Mass nach unten in eine ihrer Grösse entsprechende Ausnehmung 5 eingetaucht.

Die Seitenflächen 6 der Ausnehmung 5 sind am oberen Rand mit einem Warnstreifen 7 versehen. Ein solcher Streifen ist auch am oberen Rand einer die Brückenplatte 2 seitlich abschliessenden Wand 8 angebracht. Oberhalb dieses Streifens befindet sich noch an der Wand 8 ein Dichtungsstreifen 9, der den Spalt zwischen der Rampe 1 und der Brückenplatte 2 überbrücken bzw. abdichten soll.

Es versteht sich, dass auch an der Stirnfläche 10 der Rampe 1 am oberen Rand ein Warnstreifen 7 vorgesehen sein kann. Ebenso sind an anderen gefährlichen Stellen der Rampe 1 Warnstreifen 7 geeigneter Breite möglich.

Der Warnstreifen 7 hat eine Breite von etwa 100 mm und eine Wandstärke von etwa 0.8 mm, und er zeichnet sich vor allem dadurch aus, dass er symmetrisch bogenförmig gestaltet ist. Aus Fig. 4 ist erkennbar, dass die Durchbiegung etwa 2 mm beträgt bei einer Wandstärke von 0.8 mm und der oben angeführten Breite. Die Aussenfläche 10 des Warnstreifens 7 , die mit geeigneten, auffallenden Zeichnungen z.B. in gelb-schwarzer Farbe ausgestattet ist, ist somit konvex bzw. die Innenfläche 11 des Warnstreifens 7 entsprechend konkav gestaltet. Auf halber Höhe ist der Warnstreifen 7 mit einer Bohrung 12 versehen; der gegenseitige Abstand der Bohrungen 12 beträgt etwa 300 mm.

Der Warnstreifen 7 besteht aus einem hart eingestellten, elastisch verbiegbaren Aluminium.

Zur Befestigung der Warnstreifen 7 dienen nietartige Elemente 13, die die Bohrung 12 und durchgehende Löcher 16 in der Wand 8 bzw. einer Stahleinfassung 14 der Rampe 1 durchsetzen. Diese Elemente 13 bestehen aus Nylon und haben auf ihrem Schaft 13' sägezahnähnliche Vorsprünge 14, um sicherzustellen, dass die Schäfte 13' zwar eingetrieben, nicht aber ohne weiteres aus ihren Löchern entfernt werden können ( Sperrklinkeneffekt ). Wichtig ist dabei, dass mit dem Eintreiben der Elemente 13 die Warnstreifen 7 in Richtung auf ihre Anlagefläche durchgebogen werden, und zwar so weit, dass die Mittelpartie der Warnstreifen 7 zur Anlage kommt, jedoch zu beiden Seiten der Bohrung 12 noch eine Auswölbung verbleibt, die bei 15 angedeutet ist. Dies hat zur Folge, dass mit Vorteil die Ränder 7' stark an die Anlagefläche angedrückt werden. Damit wird eine besonders gute Befestigung der Warnstreifen erreicht.

Um eine Beschädigung der Dichtungsstreifen 9 auszuschliessen, werden die Ränder 7' aussen abgerundet oder abgeschrägt.

## Patentansprüche

1. Warnstreifen zur Anbringung an Verladerampen und zugehörige Verladeeinrichtungen, vorzugsweise an gefährlichen Rändern von Überladebrücken und Rampenausnehmungen, dadurch gekennzeichnet, dass der aus einem elastisch verbiegbaren Werkstoff bestehende Warnstreifen (7) im nicht montierten Zustand auf der Rückseite (11) vorspringende Randbereiche (7') aufweist und die Befestigung der Warnstreifen durch sie durchsetzende, in die Rampe (1) bzw. die Einrichtungen (3) eingetriebene bzw. eingeführte Befestigungselemente (13) in der Weise erfolgt, dass die Warnstreifen in Richtung auf ihre Anlagefläche durch Verbiegen verformbar sind.

2. Warnstreifen nach Anspruch 1, dadurch gekennzeichnet, dass die Warnstreifen (7) im noch nicht montierten Zustand bogenförmig gestaltet sind.

3. Warnstreifen nach Anspruch 1, dadurch gekennzeichnet, dass die Ränder der Warnstreifen (7) im noch nicht montierten Zustand abgewinkelt oder abgebogen sind.

4. Warnstreifen nach Anspruch 1, dadurch gekennzeichnet, dass sie aus Aluminium bestehen.

5. Warnstreifen nach Anspruch 1, dadurch gekennzeichnet, dass die zur Aufnahme der Befestigungselemente (13) dienenden Löcher (12) des Warnstreifens (7) etwa auf halber Breite des Streifens angeordnet sind.

6. Warnstreifen nach Anspruch 1, dadurch gekennzeichnet, dass die Ränder (7') der Warnstreifen aussen abgerundet oder abgeschrägt sind.

7. Warnstreifen nach Anspruch 1, dadurch gekennzeichnet, dass die Befestigungselemente (13) nietartig gestaltet sind, deren Schäfte (13') mit Sperrklinken oder Sägezähnen versehen sind.

8. Warnstreifen nach Anspruch 7, dadurch gekennzeichnet, dass die Befestigungselemente (13) aus einem zähharten Kunststoff bestehen.

9. Warnstreifen nach Anspruch 1, dadurch gekennzeichnet, dass die Warnstreifen (7) im montierten Zustand neben ihrer Befestigungsstelle ( Lochbereich ) ausgewölbt sind (Auswölbung 15).

10. Warnstreifen nach Anspruch 1, dadurch gekennzeichnet, dass der gegenseitige Abstand der Befestigungselemente (13) etwa 25 - 35 cm beträgt.

11. Warnstreifen nach Anspruch 1 und 9, dadurch gekennzeichnet, dass er im montierten Zustand im Bereich seiner Befestigungselemente (13) seine Anlagefläche (8,14) berührt.
